# EUROPÄISCHE PATENTSCHRIFT

(11) **EP 0 739 927 B1**
(45) Veröffentlichungstag und Bekanntmachung des Hinweises auf die Patenterteilung: **15.07.1998**
(21) Anmeldenummer: 96105938.3
(22) Anmeldetag: 16.04.1996
(51) Int. Cl.: C08G 77/38

(54) **Verfahren zur Herstellung carbonsäurefunktioneller Silane und Siloxane**
Method of making carboxylic acid functional silanes and siloxanes
Méthode pour la préparation des silanes et siloxanes à fonction acide carboxylique

(30) Priorität: 29.04.1995 DE 19515881
(43) Veröffentlichungstag der Anmeldung: 30.10.1996
(73) Patentinhaber: Th. Goldschmidt AG, 45127 Essen (DE)
(72) Erfinder: Knebelkamp, Arno, Dr., 45131 Essen (DE); Lersch, Peter, Dr., 46119 Oberhausen (DE); Weitemeyer, Christian, Dr., 45134 Essen (DE)

(56) Entgegenhaltungen:
- EP-A- 0 186 507
- EP-A- 0 196 169
- EP-A- 0 675 150
- US-A- 4 990 643
- XP000559492
- XP000559492 Polymer vol.37, no.5, pp 854-854, 1996, "Synthesis of siloxanes...." Puyenbroek et al

## Beschreibung

Die vorliegende Erfindung befaßt sich mit einem Verfahren zur Herstellung von Silanen bzw. Siloxanen (im folgenden kurz als Sil(ox)ane bezeichnet) mit Carbonsäurefunktionalitäten. Dieses Verfahren ist dadurch gekennzeichnet, daß man an eine Wasserstoffsilan- bzw. Wasserstoffsiloxanverbindung einen tertiären Butylester mit olefinischen Doppelbindungen, z. B. Methacrylsäure-t-butylester, in Gegenwart eines Übergangsmetallkatalysators addiert und daran anschließend die sil(ox)angebundene tertiäre Butylestergruppe unter Abspaltung von Isobuten in die entsprechende Carbonsäuregruppe überführt. Besondere Vorteile dieses Verfahrens liegen in der lösungsmittelfreien, einstufigen Synthese, den hohen Selektivitäten in bezug auf die Ausbeute an freien Carbonsäuregruppen und darin, daß kommerziell verfügbare Ausgangsverbindungen verwendet werden.

Methoden zur Herstellung von carbonsäurefunktionellen Silanen bzw. Siloxanen sind bekannt und z. B. beschrieben in W. Noll: "Chemie und Technologie der Silicone" S. 142 ff. (2. Auflage, Verlag Chemie, Weinheim 1968). So können SiH-Verbindungen mit ungesättigten Carbonsäuregruppen in Gegenwart bekannter Katalysatoren, wie z. B. Platinverbindungen, hydrosilylierend umgesetzt werden. Die Selektivität derartiger Reaktionen ist allerdings recht gering, da als signifikante Nebenreaktion die Kondensation von SiH und dem aciden Proton der Säuregruppe unter Wasserstoffabspaltung stattfindet und Si-O-C-verknüpfte Strukturen erhalten werden. Die Hydrosilylierung von Acrylnitril und anschließende sauer katalysierte Hydrolyse führt ebenfalls zu carbonsäurefunktionellen Sil(ox)anen. Der Nachteil dieser Methode ist die Verwendung des toxikologisch nicht unbedenklichen Acrylnitrils sowie die Anwesenheit von Wasser, wodurch insbesondere bei den Siloxanderivaten unerwünschte Emulsionsprobleme bei der Abtrennung auftreten können. Zudem ist eine quantitative Ausbeute an freien Carbonsäuregruppen nur sehr aufwendig zu realisieren. Die gleichen Probleme treten bei der Hydrolyse von Anlagerungsprodukten ungesättigter Ester, wie z. B. Methylmethacrylat oder Methacrylsäuretrimethylsilylester, an Sil(ox)ane auf.

Methoden zur Einführung der Carbonsäuregruppen über Grignard-Verfahren (Magnesium und CO₂ an z. B. Si-CH₂-Cl) oder aus Carbonylverbindungen mit aktivierten CH-Gruppen (Malonestersynthesen mit Halogenidalkylsiloxanen, z. B. Si-CH₂-Cl, und anschließender Hydrolyse sowie Decarboxylierung) sind als industrielle Verfahren wenig geeignet, da hohe Anforderungen bezüglich der Reinheit der Edukte und an die apparative Seite der Prozeßführung gestellt werden müssen.

Es wäre für die Darstellung von carbonsäurefunktionellen Sil(ox)anen von erheblichem Vorteil, könnte man eine lösungsmittelfreie, einstufige und hochselektive Synthese finden. Überraschenderweise wurde nun gefunden, daß die gewünschten carbonsäurefunktionellen Sil(ox)ane in einfacher Weise hergestellt werden können, indem man an eine Wasserstoffsilan- bzw. Wasserstoffsiloxanverbindung einen tertiären Butylester mit olefinischen Doppelbindungen addiert und unmittelbar daran anschließend die sil(ox)angebundene tertiäre Butylestergruppe unter Abspaltung von Isobuten in die entsprechende Carbonsäuregruppe überführt.

Anwendungen finden solche carbonsäurefunktionellen Siloxane z. B. für die Herstellung wäßriger Siliconemulsionen zur Ausrüstung von textilen Materialien (beschrieben in US-PS 4 477 514) oder als Feuchthaltemittel in kosmetischen Formulierungen (beschrieben in US-PS 5 280 019).

Beispiele für die erfindungsgemäß hergestellten Verbindungen sind:

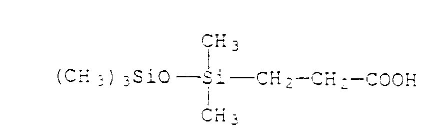

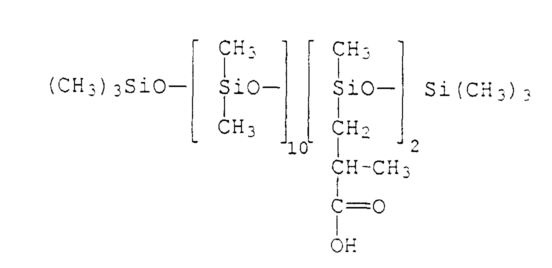

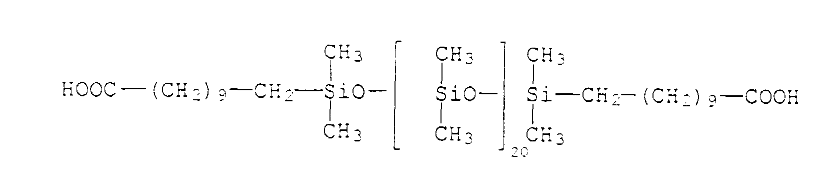

Als Ausgangsverbindungen kommen Siloxane der allgemeinen Formel 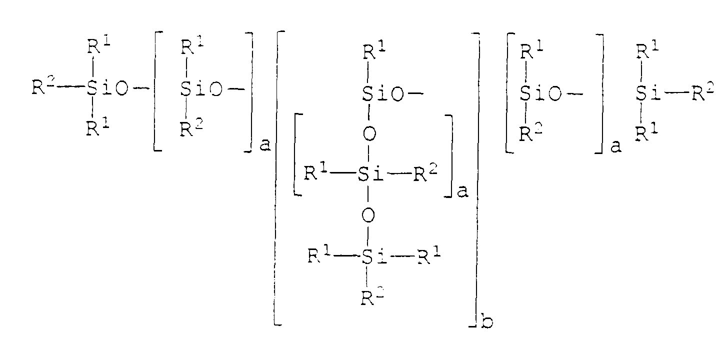 in Frage, in der die Reste
- R¹: gleich oder verschieden sind und Alkylreste mit 1 bis 4 Kohlenstoffatomen oder Phenylreste sind, wobei jedoch mindestens 90 % der Reste R¹ Methylreste sind,
- R²: die Bedeutung der Reste R¹ haben oder Wasserstoffreste sind,
wobei jedoch mindestens ein Rest R² ein Wasserstoffrest ist, und die Indices
- a: einen durchschnittlichen Wert von 0 bis 100 und
- b: einen durchschnittlichen Wert von 0 bis 5 haben.

Als Silane werden eingesetzt solche der Formel 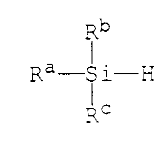 wobei R^{a}, R^{b} und R^{c} im Molekül gleich oder verschieden sein können und sowohl aliphatische oder aromatische Kohlenwasserstoffreste als auch Alkyloxy- oder Aryloxyreste oder Halogenreste bedeuten können.

Die Sil(ox)ane werden unter hydrosilylierenden Bedingungen umgesetzt mit Estern der Formel

H₂C=C(R¹)-C(O)O-t-Bu;

mit R¹ = H, CH₃ sowie

H₂C=C(R¹)-R²-C(O)O-t-Bu;

wobei R¹ = H, CH₃ ist sowie R² ein ggf. verzweigter und/oder cyclischer Alkylenrest mit 1 bis 30 Kohlenstoffatomen ist. Gegebenenfalls kann die C-Kette durch O unterbrochen bzw. mit funktionellen Gruppen substituiert sein.

Geeignete Ester sind insbesondere Methacrylsäure-t-butylester, Acrylsäure-t-butylester oder Undecensäure-t-butylester.

Als cyclischer Ester kommt insbesondere der Norbornencarbonsäure-t-butylester in Betracht.

Die Hydrosilylierungsreaktion ist an sich bekannt und beispielsweise ausführlich beschrieben in W. Noll: "Chemie und Technologie der Silicone" S. 45 ff. (2. Auflage, Verlag Chemie, Weinheim 1968).

Zur Darstellung der t-butylesterfunktionellen Sil(ox)ane wird die Hydrosilylierung mit äquimolaren Mengen der Reaktionspartner, vorzugsweise in Gegenwart von Übergangsmetallkatalysatoren, insbesondere Platin- und Rhodiumverbindungen, bei Temperaturen von 60 bis 140 °C, vorzugsweise bei 100 bis 130 °C, durchgeführt.

Die Entschützung von t-Butylestern unter Abspaltung von Isobuten ist ebenfalls in der Literatur beschrieben. Von der Vielzahl der beschriebenen Varianten sind diejenigen für die Reaktion mit t-butylesterfunktionellen Sil(ox)anen besonders bevorzugt, die eine hohe katalytische Aktivität aufweisen. Beispiele für Katalysatoren dieser Art sind starke Mineralsäuren, organische Säuren, wie Methansulfonsäure oder p-Toluolsulfonsäure, und heterogene acide Katalysatoren, wie z. B. Aluminiumsilikate, Zeolithe und Schichtsilikate.

Je nach Art des verwendeten Katalysators liegt die Reaktionstemperatur bei 60 bis 120 °C, bevorzugt bei 80 bis 100 °C.

Auch in Gegenwart von sog. Crivello-Salzen (Aryloniumsalze, z. B.: Diphenyliodonium-triflat oder Triphenylsulfoniumhexafluorophosphat), die als photochemische Säuregeneratoren fungieren, läßt sich die Isobutenabspaltung durchführen.

Zudem kann die Abspaltung des Isobutens auch bei Temperaturen oberhalb von 160 °C ohne Katalysator durchgeführt werden (thermische Isobutenabspaltung).

Herstellungs- und Verwendungsbeispiele:

### Beispiel 1

109,5 g (0,77 Mol) Methacrylsäure-t-butylester werden mit 4 mg (= 20 ppm Pt) Hexachloroplatinsäure H₂PtCl₆ in einem 500-ml-Vierhalskolben, ausgestattet mit Rührer, Tropftrichter, Thermometer und Rückflußkühler, vorgelegt und unter Rühren auf 110 °C aufgeheizt. Bei dieser Temperatur werden 206,6 g (0,1 Mol) eines seitenständig SiH-funktionalisierten Polydimethylsiloxans der allgemeinen Formel MD₂₀D^{H}₇M (Formel 1) und mittleren Gesamtkettenlänge N = 29 derart zugetropft, daß trotz einsetzender exothermer Reaktion eine Temperatur von 130 °C nicht überschritten wird. Nach beendeter Zugabe wird die Reaktionsmischung noch 1 bis 2 h weiter bei 110 °C gerührt, bis die Umsatzkontrolle über den SiH-Wert zeigt, daß der Methacrylatester vollständig hydrosilylierend angelagert wurde. Bei einem Umsatz von > 99 % wird die Reaktion abgebrochen und die Pt-Katalysatorreste aus der Reaktionsmischung durch Filtration entfernt.

155 g (0,51 Mol) des so hergestellten t-butylesterfunktionellen Siloxans (Formel 2) werden in einem 250-ml-Vierhalskolben, ausgestattet mit Rührer, Thermometer und Rückflußkühler vorgelegt, unter Rühren auf 85 °C aufgeheizt und bei dieser Temperatur mit 1,94 g (1,25 Gew.-%) Methansulfonsäure als Katalysator versetzt. Während der Reaktion ist eine kontinuierliche Abspaltung von Isobuten zu beobachten. Mittels ¹H-NMR-Spektroskopie und Säurezahlbestimmung wird die Abnahme der t-Butylestergruppen als Funktion der Zeit verfolgt. Nach insgesamt 1 h Reaktionsdauer war keine Gasentwicklung mehr festzustellen; der Umsatz nach Säurezahlbestimmung beträgt 98 %. NMR-spektroskopisch (¹H-, ¹³C-NMR : Vergleich der Signalintensitäten der charakteristischen tert.-Butylgruppe) ergibt sich ein Umsatz von 97 %. Nach der Filtration wird ein gelbes, flüssiges Reaktionsprodukt erhalten, welches seitenständige Carbonsäuregruppen aufweist und nach den Analysenergebnissen der zu erwartenden mittleren Zusammensetzung MD₂₀D^{Carboxyl}₇M (Formel 3) entspricht.

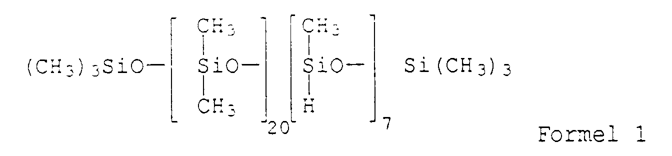

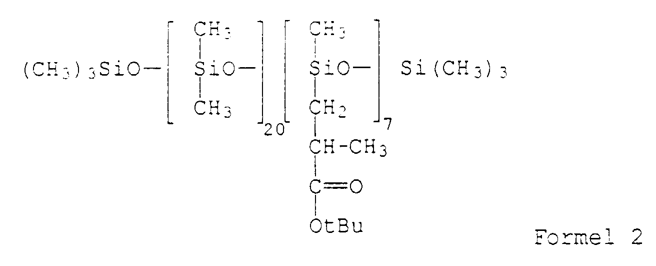

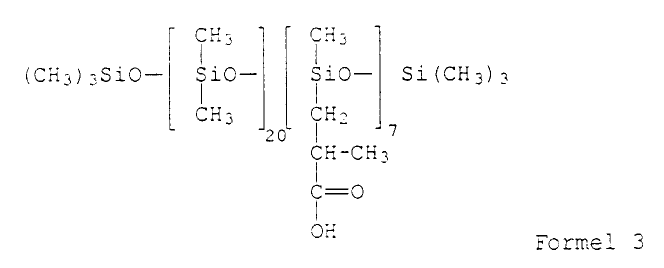

### Beispiel 2

Es wird verfahren wie in Beispiel 1 mit der Ausnahme, daß auf die Abtrennung des Pt-Katalysators verzichtet wird und in einem Eintopfverfahren anstelle von Methansulfonsäure p-Toluolsulfonsäuremonohydrat (2,5 Gew.-%) eingesetzt wird. Nach 1 h Reaktionszeit beträgt der Umsatz 98 % (NMR).

### Beispiel 3

Es wird verfahren wie in Beispiel 2 mit der Ausnahme, daß zunächst 4 Gew.-% Calcium-Bentonit (K 10/Fa. Südchemie/säureaktivierte Form) zugegeben werden und nach 3 h Reaktionszeit zusätzlich 1 Gew.-% Methansulfonsäure. Die Reaktionstemperatur beträgt 100 °C. Nach einer Gesamtreaktionszeit von 4 h wird das Produkt filtriert. Die Säurezahl des erhaltenen Materials beträgt 150, was einem Umsatz von etwa 98 % entspricht. Über die ¹H-NMR-Spektroskopie ergibt sich ein Umsatz von 100 %.

### Beispiel 4

In analoger Weise wie in Beispiel 1 dargelegt wird ein t-butylesterfunktionelles Siloxan der allgemeinen Formel M^{t-Butylester}D₈M^{t-Butylester} (Formel 4) und mittleren Gesamtkettenlänge N = 10 durch die platinkatalysierte Anlagerung von Methacrylsäure-t-butylester an ein entsprechendes SiH-Siloxan hergestellt.

82 g des so dargestellten Siloxans (ca. 90 mMol) werden in einem 250-ml-Vierhalskolben, ausgestattet mit Rührer, Thermometer und Rückflußkühler, unter Rühren auf 100 °C erwärmt und mit 0,82 g (1 Gew.-%) Calcium-Bentonit versetzt. Die beginnende Abspaltung des Isobutens läßt sich an einer deutlichen Gasentwicklung erkennen. Nach 3 h werden erneut 0,82 g (1 Gew.-%) Calcium-Bentonit zugegeben und für weitere 2 h bei der Temperatur belassen. Abschließend wird das Reaktionsgemisch filtriert. Die Kontrolle des Reaktionsumsatzes erfolgt über die Bestimmung der Säurezahl. Diese beträgt 121 nach 3 h Reaktionszeit; für das Endprodukt wird eine Säurezahl von 130 bestimmt, was einem Umsatz von > 99 % entspricht (Formel 5).

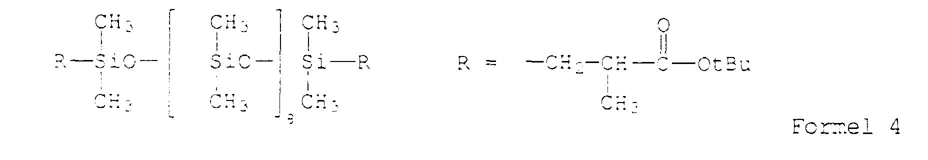

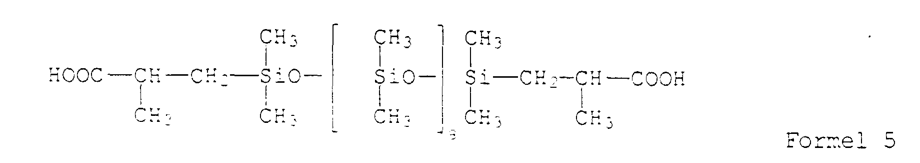

### Beispiel 5

Es wird verfahren wie in Beispiel 1 mit der Ausnahme, daß anstelle des Calcium-Bentonits die Entschützung mit Methansulfonsäure (1 Gew.-%, einmalige Zugabe) durchgeführt wird. Die Reaktionstemperatur beträgt 85 °C, die Reaktionszeit 1 h; der Umsatz ermittelt sich zu 98 % .

### Beispiel 6

Es wird verfahren wie in Beispiel 1 mit der Ausnahme, daß Calcium-Bentonit und Methansulfonsäure (je 1 Gew.-%) gemeinsam zugegeben werden. Bei einer Reaktionstemperatur von 100 °C beträgt der Umsatz nach 1 h Reaktionszeit > 99 %.

### Anwendungtechnische Prüfungen

Zur Überprüfung der anwendungstechnischen Eigenschaften der erfindungsgemäß zu verwendenden modifizierten carbonsäurefunktionellen Polydimethylsiloxane wurde ihre Eignung als Emulgatoren untersucht. Zu diesem Zwecke wurden Öle unterschiedlicher chemischer Natur eingesetzt und dabei die Konzentration des eingesetzten Emulgators variiert.

Für die Testformulierungen wurden die entsprechenden Öle mit dem Emulgator vorgemischt und die zugesetzte Wassermenge mit Hilfe eines Dispermaten unter Rühren portionsweise zugesetzt und einer optischen Prüfung unterzogen. In der nachfolgenden Tabelle sind die erhaltenen Ergebnisse für einige Testformulierungen angeführt.
- Emulgator A =: Produkt aus Beispiel 1
- Emulgator B =: Produkt aus Beispiel 4

| Ölphase | Emulgator A | Emulgator B |
|---|---|---|
| PDMS-Siliconöl (350 cP) | 2 | 3 |
| Weißöl 5E | 1-2 | 2 |
| Kokosöl | 4-5 | 3 |

Die Zusammensetzung der Mischungen betrug jeweils:
Emulgator (1 Tl), Ölphase (4 Tl), Wasser (15 Tl)
- Bewertungkriterien 1-5:: 1 = sofortige Entrahmung
5 = keine Entrahmung

Aus der Tabelle ergibt sich, daß die erfindungsgemäß zu verwendenden, modifizierten Organopolysiloxane die gewünschten anwendungstechnischen Eigenschaften zeigen.

Es ist verständlich und dem Fachmann geläufig, daß diese Beispiele nur eine Auswahl der vorhandenen Möglichkeiten darstellen und keineswegs als Beschränkung anzusehen sind.

So sind über den beschriebenen Weg natürlich auch Emulgatoren für W/O-Anwendungen erhältlich, indem man bei feststehender Gesamtkettenlänge die Anzahl der Carbonsäuregruppen (D^{Carboxyl}) in entsprechender Weise erhöht.

## Patentansprüche

1. Verfahren zur Herstellung von Silanen bzw. Siloxanen mit Carbonsäurefunktionalitäten, dadurch gekennzeichnet, daß man an eine Wasserstoffsilan- bzw. Wasserstoffsiloxanverbindung einen tertiären Butylester der Formel H₂C=C(R₁)-C(O)O-t-Bu mit R¹ = H, CH₃ addiert und anschließend die sil(ox)angebundene tertiäre Butylestergruppe unter Abspaltung von Isobuten in die entsprechende Carbonsäuregruppe überführt.

2. Verfahren gemäß Anspruch 1, dadurch gekennzeichnet, daß man die Hydrosilylierung mit einer Wasserstoffsiloxanverbindung der allgemeinen Formel 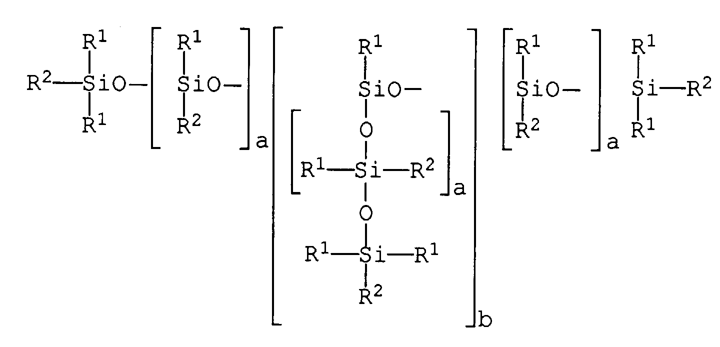 durchführt, in der die Reste
R¹ gleich oder verschieden sind und Alkylreste mit 1 bis 4 Kohlenstoffatomen oder Phenylreste sind, wobei jedoch mindestens 90 % der Reste R¹ Methylreste sind,
R² die Bedeutung der Reste R¹ haben oder Wasserstoffreste sind, wobei jedoch mindestens ein Rest R² ein Wasserstoffrest ist,
und die Indices
a einen durchschnittlichen Wert von 0 bis 100 und
b einen durchschnittlichen Wert von 0 bis 5 haben.

3. Verfahren gemäß Anspruch 1, dadurch gekennzeichnet, daß man die Hydrosilylierung mit einer Wasserstoffsilanverbindung der allgemeinen Formel 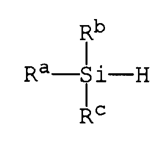 durchführt,
wobei R^{a}, R^{b} und R^{c} im Molekül gleich oder verschieden sein können und sowohl aliphatische oder aromatische Kohlenwasserstoffe als auch Alkyloxy- oder Aryloxyreste oder Halogenreste sein können.

4. Verfahren gemäß den Ansprüchen 1 bis 3, dadurch gekennzeichnet, daß man die Ausgangsverbindungen in äquimolaren Mengen bei Temperaturen von 80 bis 130 °C in Gegenwart eines Übergangsmetallkatalysators addiert.

## Claims

1. Process for preparing silanes or siloxanes having carboxyl functionalities, characterized in that a tertiary butyl ester of the formula H₂C = C(R¹)-C(O)O-t-Bu where R¹ = H, CH₃ is added onto a hydrogen silane or hydrogen siloxane compound and the sil(ox)ane-bonded tertiary butyl ester group is subsequently converted into the corresponding carboxyl group with elimination of isobutene.

2. Process according to Claim 1, characterized in that the hydrosilylation is carried out using a hydrogen siloxane compound of the general formula 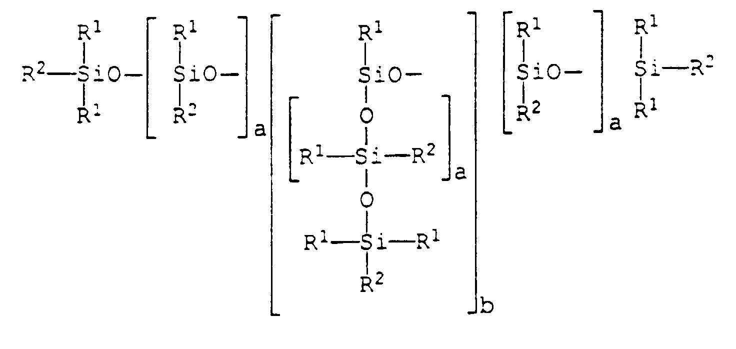 where the radicals
R¹ are identical or different and are alkyl radicals having from 1 to 4 carbon atoms or phenyl radicals, but with at least 90% of the radicals R¹ being methyl radicals,
R² are as defined for the radicals R¹ or are hydrogen radicals, but with at least one radical R² being a hydrogen radical,
and the indices
a has an average value of from 0 to 100 and
b has an average value of from 0 to 5.

3. Process according to Claim 1, characterized in that the hydrosilylation is carried out using a hydrogen silane compound of the general formula 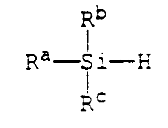 where R^{a}, R^{b} and R^{c} in the molecule can be identical or different and can be either aliphatic or aromatic hydrocarbons or alkyloxy or aryloxy radicals or halogen radicals.

4. Process according to Claims 1 to 3, characterized in that the starting compounds are reacted in equimolar amounts at temperatures of from 80 to 130°C in the presence of a transition metal catalyst.

## Revendications

1. Procédé de préparation de silanes ou de siloxanes à fonctions acide carboxylique, caractérisé en ce que l'on ajoute un ester butylique tertiaire de formule H₂C=C(R¹)-C(O)O-t-Bu avec R¹ = H, CH₃ à un composé hydrogénosilane ou d'hydrogénosiloxane, et ensuite en ce que le radical ester butylique tertiaire lié au sil(ox)ane est transformé en le radical acide carboxylique correspondant par séparation d'isobutène.

2. Procédé suivant la revendication 1, caractérisé en ce que l'on réalise l'hydrosilylation avec un composé hydrogénosiloxane de formule générale : 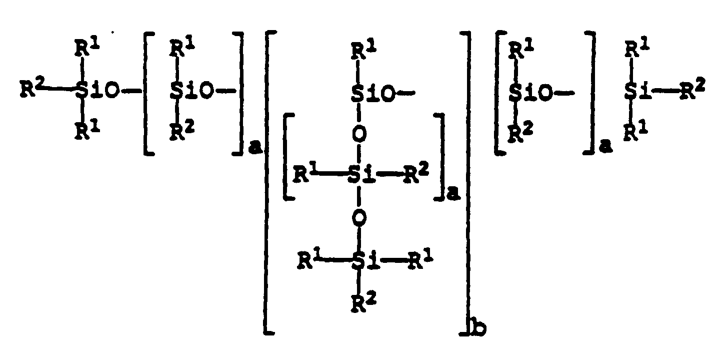 dans laquelle :
les radicaux R¹ sont identiques ou différents et sont des radicaux alcoyle avec 1 à 4 atomes de carbone ou des radicaux phényle, au moins 90% des radicaux R¹ étant toutefois des radicaux méthyle;
les radicaux R² ont la signification des radicaux R¹ ou sont des radicaux hydrogène, au moins un radical R² étant toutefois un radical hydrogène, et
les indices a ont une valeur moyenne de 0 à 100, et
les indices b ont une valeur moyenne de 0 à 5.

3. Procédé suivant la revendication 1, caractérisé en ce que l'on réalise l'hydrosilylation avec un composé hydrogénosilane de formule générale : 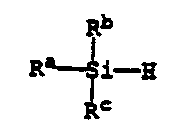 dans laquelle R^{a}, R^{b} et R^{c} dans la molécule peuvent être identiques ou différents et peuvent aussi bien être des hydrocarbures aliphatiques ou aromatiques que des radicaux alcoyloxy ou aryloxy ou des radicaux halogène.

4. Procédé suivant les revendications 1 à 3, caractérisé en ce que l'on ajoute les composés de départ en quantités équimolaires à des températures de 80 à 130°C en présence d'un catalyseur à base d'un métal de transition.
